Europäisches Patentamt

**European Patent Office**

**Office européen des brevets**

(19)

(11) Publication number: **0 132 965**
**A2**

(12) # EUROPEAN PATENT APPLICATION

(21) Application number: **84304503.0**

(22) Date of filing: **29.06.84**

(51) Int. Cl.⁴: **A 01 M 1/18**
**C 09 J 3/00**

(30) Priority: **01.07.83 ZA 834819**

(43) Date of publication of application:
**13.02.85 Bulletin 85/7**

(84) Designated Contracting States:
**AT BE CH DE FR GB IT LI LU NL SE**

(71) Applicant: **SUNDREX (PROPRIETARY) LIMITED**
**200 Landsdowne Road**
**Jacobs Durban Natal(ZA)**

(72) Inventor: **Bishop, Richard Timothy**
**20 Miller Grove**
**Berea Durban, Natal(ZA)**

(74) Representative: **Brown, John David et al,**
**FORRESTER & BOEHMERT Widenmayerstrasse 4/l**
**D-8000 München 22(DE)**

(54) **Insect barrier for trees and the like.**

(57) A barrier for trees, vines and the like to prevent movement of ants and other crawling insects by providing a band of an aqueous emulsion of a synthetic polymer around the stem, the polymer having a $Tg < -60°C$, a low molecular weight for optimum tackiness and a viscosity $>3,000$ cps.

EP 0 132 965 A2

"Insect Barrier for Trees and the Like"

This invention relates to producing a barrier which
prevents the movement of ants, and other crawling
insects, up the stems into trees and vines.

In the past sticky barriers such as the one under discussion have been used for the same application. However, the composition or method of application of these products very often causes damage to the trees they are designed to protect. For this reason the compositions must always be applied to a support fabric (so that they do not come into contact with the tree) and the coated fabric is then placed around the stem of tree, vine or the like. A major disadvantage is then that insect pests take refuge between the fabric and tree and breed to cause further damage. Previous products used have generally been of the polybutadiene and polybutene type which are extremely difficult to apply at ambient temperature. Other products which have reasonable viscosity are solvent based and thus are deleterious to the bark of the tree as well as causing health and fire hazards due to the inflammable fumes they emit. The solvents also cause damage to plant materials.

It is an object of the present invention to provide compositions which are effective as barriers and which do not suffer from the disadvantages outlined above.

According to the invention there is provided a method of preventing crawling insects gaining access into trees, vines etc, by applying a band of an aqueous emulsion of a synthetic polymer around the stem of the tree, the emulsion having a very low Tg, and the molecular weight of the polymer is optimised thus making it very tacky.

The aqueous emulsion may be thickened to a viscosity in excess of 3 000 cps using conventional thickeners for application by brush, roller or directly from a tube.

The emulsion paste may be applied directly onto the stems of trees or vines.

In a preferred form of the invention the aqueous emulsion polymer composition generally consists of a major proportion of one or more $C_1$ - $C_{18}$ esters of acrylic or methacrylic acid, or of butadiene or ethylene, optionally together with smaller amounts of other vinyl monomers such as vinyl acetate, styrene,

0132965

vinyl esters of versatic acid, vinyl propionate, acrylonitrile, dioctylmaleate, dibutylmaleate, etc., natural (e.g. Wood Rosin) or synthetic (e.g. coumarone indene) tackifying resins and other components may be blended with the aqueous emulsion to enhance performance.

The essential properties of the aqueous emulsion once dried on a substrate, are that the polymer film (above or in a blend with the other ingredients) should have a low molecular weight resulting in an extremely low cohesive film strength together with a high degree of tackiness.

The invention also relates to the rejuvenation or removal of the barriers of the invention.

The sticky barriers suffer from the problem of becoming ineffective by adherence thereto of dust, dead insects, twigs and other material.  When this happens to a certain extent the barriers become ineffective.

Thus, according further to the invention a method of rejuvenating or reconstituting the surface of a sticky barrier includes the steps of applying or forming a film on the surface which adheres to the material constituting the surface and then stripping off the film to which adheres the ineffective surface of the barrier thereby exposing a fresh layer of the original sticky barrier.

In one form of the invention a strip of pressure sensitive adhesive is applied to the surface.

In another form of the invention a liquid composition with film forming properties is applied to the surface to be rejuvenated by means of brush or the like, and allowed to dry, or set. It is then removed by stripping, which causes the existing surface together with the dust, and other debris to be removed and thereby exposing a fresh surface.

Example 1

Various aqueous emulsions were produced by conventional emulsion polymerisation procedures, the polymer components thereof comprising:-

| Sample 1- | a | b | c | d | e | | g | h | i | j |
|---|---|---|---|---|---|---|---|---|---|---|
| 2 ethyl hexyl acrylate | 100 | 90 | | | 85 | | | 94 | | |
| butyl acrylate | | | 100 | 87 | 15 | | | | | |
| ethyl acrylate | | | | | | | | | | 100 |
| butadiene | | | | | | | 100 | | | |
| acrylonitrile | | 10 | | | | | | | | |
| vinylester of versatic acid | | | | | | | | 6 | | |
| Ethylene | | | | | | | | | 95 | |
| Vinyl Propionate | | | | 13 | | | | | | |
| Vinyl Acetate | | | | | | | | | 5 | |
| | 100 | 100 | 100 | 100 | 100 | | 100 | 100 | 100 | 100 |

All examples exhibited Tg values below -10°C, but dry films while sticky showed considerable cohesive strength. Molecular weights for all samples were in excess of 300 000 as determined by steric exclusion chromotography with reference in polystyrene. The aqueous emulsions were at 50% solids content and pH, after adjustment of 9.0 - 9.5. A portion of each sample was thickened to a final viscosity of 50 000 cps.

Example 2

The aqueous emulsions of Example 1 were made a second time but this time with the inclusion of between 0.1 and 2.0 parts, as appropriate for each system, of a chain transfer agent to ensure optimum low molecular weight to achieve desired low cohesive film strengths and aggresive tackiness. Specifically Sample 2-aa based on 2 ethyl hexyl acrylate had the following composition:-

|  | Sample 2-aa |
| --- | --- |
| 2 ethyl hexyl acrylate | 100 |
| Tertiary Dodecyl Mercaptan | 0.3 |

All samples again exhibited Tg values below -10°C but in addition extremely tacky low cohesive strength dry films were also achieved. All were judged to be sufficiently sticky to entrap crawling insects.

Molecular weights of the samples were determined as above and were as follows:-

| 2 | aa | bb | cc | dd | ee | gg | hh |
|---|-----|-----|-----|------|-----|------|------|
|   | 80 000 | 90 000 | 70 000 | 118 000 | 70 000 | 180 000 | 140 000 |

| ii | jj |
|----|----|
| 180 000 | 160 000 |

### Example 3

Films of samples 1-a through 2-jj in both the thickened and original forms were applied to a substrate and allowed to dry. Several species of ants were placed on each film. While some of the larger species stuck to films from samples 1-a - 1-j the smaller species were able to escape. However, even the smallest species became trapped on the sticky surfaces of samples 2-aa - 2-jj. Clearly 2-gg and 2-ii were less satisfactory as a number of ants extracted themselves from the films.

In the context of this specification there are no recognised standard procedures to measure/quantify appropriate parameters for the various compositions; these were assessed subjectively for "tackiness" and rates as follows:-

### Samples 1-a - 1-jj

1-a best; 1-g worst (and certainly unsatisfactory for all the species of ants)

2-aa, 2-cc, 2-bb and 2-ee similar.

2-gg worst.

Subjective evaluation correlated reasonably well with observed performance with ants.


## Example 4


Selected samples from Example 1 and Example 2 were further compounded with tackifying resin (as in aqueous emulsion).

| Sample 4- | a | b | c | d | e |
|---|---|---|---|---|---|
| Sample 2-aa | 100 | | | | |
| Sample 2-dd | | 100 | | | |
| Sample 2-gg | | | 100 | | |
| Sample 2-hh | | | | 100 | |
| Staybelite Ester 10 | 5 | 5 | 5 | 5 | 5 |
| Antifoam | 0.1 | 0.1 | 0.1 | 0.1 | 0.1 |
| Antioxidant (50%) | - | - | - | - | - |

Films were prepared and evaluated as in Example 3. Sample 4-c was noticeably stickier than sample 2-gg but sample 4-a was approximately similar to sample 2-aa.


## Example 5


The thickened emulsion samples 2-aa, 2-cc, 2-dd and 2-ee (as described in Example 2) were painted around the trunks of several seven year old citrus trees. On drying the bands were noted to be very tacky. After a seven day period, numerous ants and other crawling insects were found stuck in the polymer films and the trees above the protected strip were free of ants. Control trees on either sides of the treated ones contained large populations of ants. After a two month period the relative positions of treated and control trees were the same. 2EHA was selected and emulsions over a range of molecular weight polymerised, as previously described. These were tested for subjective tack, sag and performance with time in the field.

Example 6

Samples 2-aa and 2-cc as used in Example 5 above, were painted on the young buds of lemon trees. The new leaves emerged unhindered and grew perfectly. These results indicate that there is no phytotoxicity involved in the use of this type of material.

Example 7

The following tests were undertaken to show that the extreme degree of stickiness required for this critical application, and the ability of the barrier to slowly 'sag' are related to low molecular weight.

Three polymers with the same ratio of monomers (butyl acrylate 17,8% and 2 ethyl hexyl acrylate 82,2%) and same Tg (-80°C) were polymerised to give varying molecular weights.

The different polymers were then thickened to the same viscosity, e.g. 80 000 to 100 000 cps (Brookfield LVT; spindle 7 and speed 20). Films 2mm thick were then drawn down on smooth glass plates. The plates were left flat and the films allowed to air dry.

To obtain a quantitative measure of the degrees of stickiness of the polymer films the tip of a finger was pushed firmly into a film and then evenly and slowly (0,5m in 15 seconds) withdrawn. The lengths of the continuous threads, before breaking, were recorded. 10 replications were conducted on each film and the results are tabled below.

The extent of sag of the different films was determined using the same glass panels as was used for the stickiness test described above. The panels were stood at an angle of 45° and the position of the lower edges of the film marked. The extent of flow down the plates was measured after 2 and then 7 days.

| Molecular weight of polymer | Extent of thread extension before snapping (cm) | Extent of sag (cm) after 2 days; 7 days | |
|---|---|---|---|
| A. 300 000 | 1,1 | 0 | 0 |
| B. 100 000 | 19,2 | 0,5 | 1,5 |
| - | 71,9 | 3,3 | 7,5 |

Example 8

To show that the effectiveness of the polymer barriers to trap small insects on tree trunks is related to low molecular weight, the products used in Example 7 were painted out in a citrus orchard.

Barriers ± 5cm wide and ± 1cm thick were painted around the trunks of lemon trees just below the lowest branches. The treatments, randomised in 3 replications of each batch were applied. The barriers were allowed to dry for one week. The effectiveness of the different treatments to prevent the access of ants into the branches was noted.

It was noted that ants were having no trouble traversing the barriers made from polymers A. Where polymers B and C were applied the ants did not traverse the barriers.

Another inspection six weeks after application showed that the polymer B and C containing barriers were still functioning well. A final inspection, a further 3 weeks later, showed that these barriers were still functioning well but with the polymer C containing barriers noticeably stickier than the polymer B containing ones.

Example 9

To show that the insect barriers with low molecular weight and hence dry 'sag' are less affected by dust than static barriers the following test was carried out on the pastes A (molecular weight = 300 000) and C (molecular weight = 20 000) from Example 7.

Bands ± 5cm wide and ± 1cm thick of each of the two pastes were applied round the trunks of two lots of 10 orange trees, just below the lowest branches, using a paint brush. The pastes were left for a week to dry and become sticky.

After confirming that all 20 bands were sticky, the sparse grass between the trees was cut using a mechanical mower. As conditions were very dry a large amount of dust was generated. Inspection of the sticky films after mowing showed them to be coated with a thick layer of dust. Ants were seen to traverse the films at will.

Inspection of the films four weeks later showed the barrier films, made from polymer A, were still completely covered by the dust layer. In contrast, a fresh, sticky layer about 1cm wide had become exposed in the bands made from the lower molecular weight polymer B due to a widening of the barrier induced by it flowing down the stem. Several ants and other small insects were stuck in the freshly exposed film. During a long observation period no ants were able to cross the barrier.

Inspection a further 4 weeks later showed no change in the bands made from polymer A, while in those using polymer B in the bands of very sticky material were now almost 2cm wide, thus forming a very effective barrier to crawling insects.

Example 10

The sample C of Example 7 was smeared over a pane of glass. The film was dried and became very sticky.

Charcoal dust and soil were sprinkled over the film of "Rever-ant". The excess loose material was shaken off and the following treatments were applied over the dirty layer.

A.    A 2cm wide strip of commercial "masking tape" with the pressure sensitive side of the tape onto the dirt.

B.    A commercially available pre-vulcanised, natural rubber latex (B1812 manufactured by Revertex (Pty) Ltd) was brushed on in a 2cm wide strip.

C.    As in B but the B1812 was diluted with an equal volume of water before application.

D.    A different pre-vulcanised natural rubber latex (B1317 also manufactured by Revertex (SA) (Pty) Ltd) was brushed on in a 2cm wide strip.

E.    As in D but the B1937 was diluted with an equal volume of water before application.

The films of latex were allowed to dry and then they, and the masking tape were stripped off the glass plates.

The results were as follows:-

Treatment A:
Approximately 70% of the dirt came away on the sticky tape.  Patches of dirt remained.

Treatment B:
More than 95% of the dirt came away leaving behind a clean, sticky, even layer of Rever-ant.  Some of the Rever-ant layer was also removed.

Treatment C:
Approximately 85% of the dirt came away.  Very little Rever-ant was removed.

Treatment D:
Similar to B.

Treatment E:

Similar to C.

## Example 12

The procedure described in Example 11 was repeated but this time a different commercial product called Ant-Bar (marketed by Safsan) was smeared onto glass.

The results were very similar to those described in Example 11.

## Example 13

A band of Rever-ant approximately 3cm wide and 0,5cm thick was applied around the stems of several lemon trees just below the first branches.

Six weeks later a variety of insects, small flowers, leaves and dust were stuck to the films. The five treatments described in Example 11 were applied over these films. Three days later they were stripped off. The results were as follows:

A.    Because of the uneveness of the tree stems the tape failed to remove the material stuck in the recessed areas.

B. and D. worked extremely well with even the material in the recessed areas being regenerated.

Treatments C and E also worked well but the rubber films periodically broke thus making the process more difficult than with Treatments B and D.

The features disclosed in the foregoing description, and/or in the following claims may, both separately and in any combination thereof, be material for realising the invention in diverse forms thereof.

CLAIMS:

1.

A method of preventing crawling insects gaining access to upper reaches of trees, vines and the like characterised in applying a band of an aqueous emulsion of a synthetic polymer around the stem, the emulsion having a molecular weight of between 10,000 and 150,000, Tg of less than -60°C, and a viscosity in excess of 3 000 cps which dries to a barrier onto which crawling insects stick.

2.

A method as claimed in claim 1 charaterised in that the molecular weight of the polymer is between 10,000 and 60,000.

3.

The method as claimed in claim 2 characterised in that the aqueous emulsion polymer is derived from one or more $C_1 - C_{18}$ esters of acrylic or methacrylic acid.

0132965

4.

The method as claimed in claim 3 characterised in that the aqueous emulsion polymer is derived from a $C_8$ ester of acrylic acid and has a Tg of $-85^\circ C$.

5.

The method as claimed in claim 3 characterised in that one or more monomers chosen from butadiene, ethylene, isobutylene, isoprene, pentene, vinyl acetate, styrene, vinyl esters of versatic acid, vinyl propionate, acrylonitrille and dioctyl maleate is copolymerised with the $C_1$ to $C_{18}$ esters of acrylic or methacrylic acid.

6.

The method as claimed in claim 5 characterised by the presence of one or more additional tackifying resins.

7.

A composition for application to the stem of a tree, vine or the like characterised by an aqueous emulsion of a synthetic polymer having a Tg of the order of $-60^\circ C$, a molecular weight between 10,000 to 150,000 and a viscosity in excess of 3 000 cps which dries to a barrier onto which crawling insects stick.

8.

A composition as claimed in claim 7 characterised in that the polymer is derived from one or more $C_1 - C_{18}$ esters of acrylic or methacrylic acid.

9.

A composition as claimed in claim 8 characterised in that the polymer is derived from a preferred case being a $C_8$ ester of acrylic acid, the polymer having a Tg of $-85°C$ and a molecular weight of 10 000 to 60 000.

10.

A composition as claimed in claim 8 characterised by the presence of one or more polymers derived from one or more monomers chosen from butadiene, ethylene, isobutylene, isoprene, pentene, vinyl acetate, styrene, vinyl esters of versatic acid, vinyl propionate, acrylonitrile and dioctyl maleate copolymerised with the $C_1 - C_{18}$ esters of acrylic or methacrylic acid.

11.

A composition as claimed in claim 7 characterised by the presence of one or more additional tackifying resins.

12.

A method of rejuvenating the surface of a sticky barrier characterised by applying or forming a film on the surface of a barrier which has become ineffective, the film being adapted to adhere to the substance forming the barrier and stripping off the film to which adheres the ineffective surface of the barrier thereby exposing a fresh layer of the original sticky layer.

13.

The method as claimed in claim 12 characterised in that the film is a pressure sensitive adhesive strip.

14.

The method as claimed in claim 12 characterised in that a rubber latex composition is applied to the barrier and then removed.